(19) Europäisches Patentamt
European Patent Office
Office européen des brevets

(11) EP 2 124 382 A1

(12) EUROPÄISCHE PATENTANMELDUNG

(43) Veröffentlichungstag:
**25.11.2009 Patentblatt 2009/48**

(51) Int Cl.:
***H04L 9/30*** *(2006.01)* ***H04L 9/32*** *(2006.01)*

(21) Anmeldenummer: **08009277.8**

(22) Anmeldetag: **20.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **SIEMENS AKTIENGESELLSCHAFT**
**80333 München (DE)**

(72) Erfinder:
- **Braun, Michael, Dr.**
  **81825 München (DE)**
- **Kargl, Anton**
  **80639 München (DE)**
- **Meyer, Bernd, Dr.**
  **81739 München (DE)**

(54) **Verfahren zum verschlüsselten Datenaustausch und Kommunikationssystem**

(57) Die Erfindung betrifft ein Verfahren zum verschlüsselten Datenaustausch zwischen Teilnehmern eines Kommunikationssystems unter Verwendung einer Kryptographie auf Basis elliptischer Kurven, bei dem auf eine Anfrage eines ersten Teilnehmers hin von dem zweiten Teilnehmer eine Skalarmultiplikation berechnet wird, wobei lediglich ein Teil des Ergebnisses der Skalarmultiplikation als Antwort zurück zu dem ersten Teilnehmer gesendet wird. Die Erfindung betrifft ein Kommunikationssystem.

FIG 4

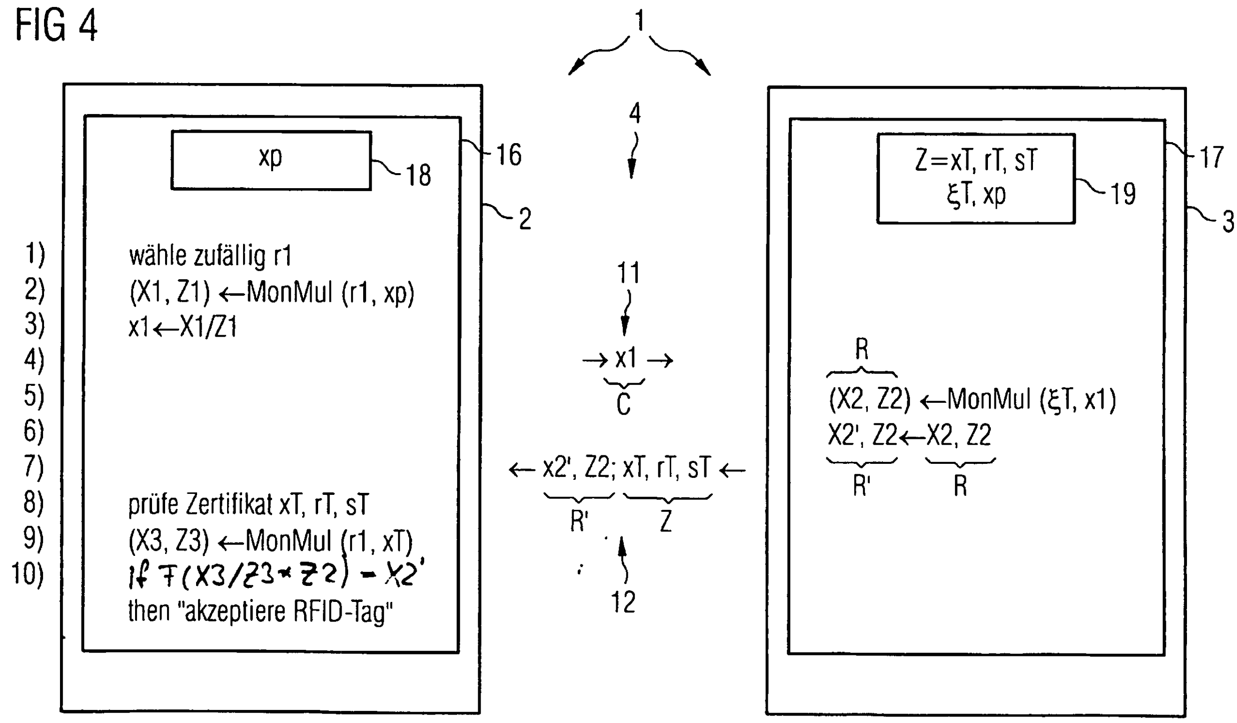


EP 2 124 382 A1

## Beschreibung

Die Erfindung betrifft ein Verfahren zum verschlüsselten Datenaustausch zwischen Teilnehmern eines Kommunikationssystems sowie ein Kommunikationssystem.

Die vorliegende Erfindung liegt auf dem Gebiet der Kommunikationstechnik und insbesondere im Bereich der kontaktlosen Kommunikation zum Zwecke der Identifikation. Wenngleich prinzipiell auf beliebige Kommunikationssysteme anwendbar, werden die vorliegende Erfindung sowie die ihr zugrunde liegende Problematik nachfolgend mit Bezug auf so genannte RFID-Kommunikationssysteme und deren Anwendungen erläutert. RFID steht dabei für "Radio Frequency Identification". Zum allgemeinen Hintergrund dieser RFID-Technologie wird auf das "RFID-Handbuch" von Klaus Finkenzeller, Hansa-Verlag, dritte aktualisierte Auflage, 2002, verwiesen.

Bei heute bekannten RFID-Systemen wird typischerweise ein von einer Basisstation (oder Lesestation oder Reader) ausgesendetes elektromagnetisches Signal von einem passiven Transponder (oder Tag) aufgenommen, der daraus die im Transponder benötigte Energie gewinnt. In den meisten auf UHF oder Mikrowellen basierenden RFID-Systemen erfolgt neben dieser unidirektionalen Energieübertragung auch eine typischerweise bidirektionale Datenkommunikation auf der Basis eines so genannten Challenge/Response-Verfahrens. Dabei sendet die Basisstation fortwährend Anfragesignale (Data Request, Challenge) aus, die lediglich dann beantwortet werden, wenn sich ein entsprechender Transponder im Wirkungsbereich dieser Basisstation befindet. In diesem Falle reagiert der sich in der unmittelbaren Umgebung der Basisstation befindliche Transponder mit einem Antwortsignal (Response). Solche RFID-Transponder werden beispielsweise zur Kennzeichnung von Gegenständen, wie zum Beispiel Waren, Dokumenten und dergleichen, verwendet.

Im Unterschied zu einer herkömmlichen drahtgestützten Datenkommunikation erfolgt die Datenkommunikation zwischen Basisstation und einem entsprechenden Transponder nahezu eigenständig und gewissermaßen im Hintergrund, ohne dass ein Benutzer überhaupt anwesend sein muss. Das heißt, die Datenkommunikation wird aufgenommen, sobald sich ein authentifizierter Transponder im Wirkungsbereich der zugehörigen Basisstation befindet. Während beispielsweise beim Auslesen eines Datenträgers, wie zum Beispiel einer Diskette, einem USB-Stick oder Ähnlichem, dieser von dem Benutzer bewusst in Kontakt mit einem entsprechenden Lesegerät gebracht werden muss und im Falle einer drahtgebundenen Datenkommunikation die Datenkommunikation von dem Benutzer ebenfalls bewusst eingeleitet werden muss, ist dies bei der RFID-basierten drahtlosen Datenkommunikation nicht der Fall.

Dies hat einige signifikante Vorteile, z.B. bei der Identifikation im Logistikbereich, in Warenhäusern, etc. Allerdings hat diese Technologie der RFID-basierten Datenkommunikation auch einige Nachteile, die es bei vielen Anwendungen zu beachten gibt.

Ein solches Problem bezieht sich auf das Auslesen von in einem RFID-Transponder enthaltenen Daten durch einen unberechtigten Nutzer (Angreifer), insbesondere dann, wenn es sich bei diesen Daten um sicherheitskritische Daten handelt. Aus diesen Gründen umfasst ein RFID-basiertes Datenkommunikationssystem typischerweise auch einen Sicherheitsmechanismus, der zum Beispiel die Datenkommunikation dahingehend absichert, dass ein Sicherheitscode von der Basisstation auf das Sendesignal aufmoduliert wird, der dann von den an der Datenkommunikation zugelassenen Transpondern decodiert und ausgewertet werden kann. Nach erfolgreicher Auswertung sendet der an der Datenkommunikation zugelassene Transponder ein Antwortsignal, das ebenfalls einen Sicherheitscode enthält, an die Basisstation zurück, welcher dann zur Authentifikation des Transponders in der Basisstation ausgewertet werden kann. Mittels dieser Authentifikation wird in der Basisstation sichergestellt, dass sich unbemerkt kein unberechtigter Nutzer in die Datenkommunikation einkoppeln und somit sicherheitskritische Daten auslesen kann.

Eine wesentliche Randbedingung bei der Transponder-basierten Datenkommunikation besteht darin, dass eine möglichst einfache und schnelle Datenkommunikation zwischen Basisstation und Transponder stattfinden soll. Dies liegt zum Einen daran, dass der Transponder typischerweise nur über geringe Ressourcen, das heißt einerseits über geringe Energieressourcen und andererseits über geringe Speicher- und Rechenressourcen, verfügt, sodass bei der Authentifikation typischerweise möglichst geringe Datenmengen ausgewertet und authentifiziert werden sollten. Andererseits sollte diese Authentifikation auch möglichst schnell durchgeführt werden, da sich vor allem bei dynamischen RFID-basierten Datenkommunikationssystemen der zu authentifizierende Transponder sehr häufig nur für eine geringe Zeitspanne im Wirkungsbereich der jeweiligen Basisstation befindet. Innerhalb dieser kurzen Zeitspanne muss einerseits eine Datenkommunikationsverbindung aufgebaut werden, diese authentifiziert werden und anschließend der Datenaustausch erfolgen.

Zur Sicherstellung der Datenkommunikation zwischen Basisstation und Transponder kann beispielsweise eine kryptographisch abgesicherte Datenkommunikation auf Basis asymmetrischer kryptographischer Verfahren erfolgen. Wesentlich für diese kryptographischen Verschlüsselungsverfahren ist, dass eine Umkehrung, das heißt eine Bestimmung des privaten Schlüssels aus dem öffentlichen Schlüssel, in vertretbarer Zeit mit den zur Verfügung stehenden Rechenkapazitäten kaum bewältigbar ist.

Es hat sich als vorteilhaft erwiesen, kryptographische Verschlüsselungsalgorithmen basierend auf elliptischen Kurven zu verwenden, da diese eine hohe Sicherheit bei kurzen Schlüssellängen gewähren. Solche kryptographische Verschlüsselungsverfahren auf Basis elliptischer Kurven sind sehr effizient, was insbesondere daran liegt, dass bei diesen Verfahren im Gegensatz zu anderen bekannten kryptographischen Verfahren keine Angriffsmethode mit subexponentieller Laufzeit bekannt ist. Anders ausgedrückt bedeutet dies, dass der Sicherheitsgewinn pro Bit der verwendeten Sicherheitsparameter bei Verfahren auf der Basis elliptischer Kurven höher ist und somit für praktische Anwendungen deutlich kürzere Schlüssellängen verwendet werden können. Somit sind kryptographische Verfahren auf der Basis elliptischer Kurven performanter und benötigen eine geringere Bandbreite zur Übertragung der Systemparameter als andere kryptographische Verfahren bei vergleichbarem Grad an erreichbarer Sicherheit.

Die kryptographischen Verfahren stellen somit einen Kompromiss zwischen einer zu erwartenden Sicherheit und dem rechnerischen Aufwand beim Verschlüsseln von Daten dar.

In der Deutschen Patentanmeldung DE 101 61 138 A1 ist dargestellt, dass eine Bestimmung des skalaren Vielfachen eines Punktes allein anhand der X-Koordinate dieses Punktes bereits ohne Hinzuziehen der Y-Koordinate möglich ist. Entsprechende Rechenvorschriften sind für beliebige Körper ebenfalls in dieser Druckschrift beschrieben. Hierdurch lassen sich wesentlich effizientere Implementierungen der Punktarithmetik, zum Beispiel einer Montgomery-Leiter, für die Skalarmultiplikationen, eine geringere Anzahl an Körpermultiplikationen pro Punktaddition und eine geringere Anzahl von Registern für die Punktdarstellung der Zwischenergebnisse erreichen.

Die Europäische Patentanmeldung EP 1 675 300 A1 beschreibt ein Authentifikationsverfahren zwischen Teilnehmern eines Kommunikationssystems, bei dem unter Verwendung bilinearer Abbildungen eine kryptographische Verschlüsselung der Datenkommunikation zwischen den Teilnehmern des Kommunikationssystems erfolgt. Diese kryptographisch abgesicherte Datenkommunikation erfolgt auf Basis elliptischer Kurven unter Verwendung eines Anfrage-Antwort-Verfahrens (Challenge-Response). In der Veröffentlichung "The Static-Diffie-Hellman Problem" von Daniel R. L. Brown und Robert P. Gallant vom 23. Juni 2005 wird ein neuer Angriff auf kryptographische Verfahren, deren Sicherheit auf dem diskreten Logarithmus- Problem in einer endlichen Gruppe beruht, beschrieben. Dieser ist insbesondere auf elliptische Kurven anwendbar. Der beschriebene Angriff kann dann effizient durchgeführt werden, wenn einem Angreifer ein Gerät zur Verfügung steht (in der Literatur "Orakel" genannt), das einen geheimen Skalar s enthält und dem Angreifer bei Eingabe eines beliebigen Punktes U das Ergebnis der Berechnung T= sU, also den Ergebnispunkt T der Skalarmultiplikation, zurückgibt. Der Angriff benötigt insbesondere eine Folge von Punkten P0, P1, P2,...,Pn auf der elliptischen Kurve, wobei $P_i = sP_{i-1}$ gilt. Dieses Angreiferszenario ist insbesondere bei dem in der Deutschen Patentanmeldung DE 101 61 138 A1 beschriebenen Verfahren gegeben, welches besonders für Anwendungen auf Systemen mit begrenztem Speicherplatz und geringer verfügbarer Rechenleistung geeignet ist.

Vor diesem Hintergrund besteht die Aufgabe der vorliegenden Erfindung darin, eine Authentifikation für eine drahtlose Datenkommunikation bereitzustellen, welche durch den oben offenbarten Angriff nicht kompromittierbar ist. Ferner ist die Aufgabe der Erfindung, eine Authentifikation für eine drahtlose Datenkommunikation bereitzustellen, für die insbesondere ein geringerer Rechenaufwand bei gleichbleibend hoher Sicherheit benötigt wird und die insbesondere auch schnell ist.

Erfindungsgemäß wird diese Aufgabe durch ein Verfahren mit den Merkmalen des Patentanspruchs 1 und/oder durch ein Kommunikationssystem mit den Merkmalen des Patentanspruchs 20 gelöst.

Demgemäß ist vorgesehen:

> Ein Verfahren zum verschlüsselten Datenaustausch zwischen Teilnehmern (2, 3) eines Kommunikationssystems (1) unter Verwendung einer Kryptographie auf Basis elliptischer Kurven, bei dem auf eine Anfrage eines ersten Teilnehmers (2) hin von dem zweiten Teilnehmer (3) ein Ergebnis einer ersten Skalarmultiplikation berechnet wird. Mit Hilfe einer nicht- injektiven Abbildung wird ein Funktionswert aus dem Ergebnis der Skalarmultiplikation ermittelt, so dass der Funktionswert keinen eindeutigen Rückschluss auf das Ergebnis erlaubt. Schließlich wird der ermittelte Funktionswert als Antwort zurück zu dem ersten Teilnehmer (2) gesendet.

Ein Kommunikationssystem zur Authentifikation der Teilnehmer des Kommunikationssystems unter Verwendung eines erfindungsgemäßen Verschlüsselungsverfahrens.

Die der vorliegenden Erfindung zugrunde liegende Idee besteht darin, bei der Authentifikation zwischen zwei Teilnehmern eines Kommunikationssystems und insbesondere bei der Übersendung eines Antwortsignals von einem Transponder zurück zu einer Basisstation diese zurück zu übertragenden Daten einer nicht-injektiven Abbildung zuzuführen, so dass die derart ermittelten Funktionswerte keinen eindeutigen Rückschluss auf das Ergebnis erlauben. Dadurch dass beispielsweise nicht mehr die vollständige x-Koordinate des Ergebnispunktes ausgegeben wird, sondern ein daraus berechneter Funktionswert, welcher nicht mehr eine eindeutige Rekonstruktion der x-Koordinate zulässt, ist die für den beschriebenen Angriff notwendige Iteration der Skalarmultiplikation unter Verwendung des Orakels nicht mehr möglich und der Angriff wird abgewehrt.

In einer besonders vorteilhaften Ausgestaltung der vorliegenden Erfindung werden bei der Authentifikation zwischen zwei Teilnehmern eines Kommunikationssystems und insbesondere bei der Übersendung eines Antwortsignals von einem Transponder zurück zu einer Basisstation diese zurück zu übertragenden Daten durch die nicht-injektive Abbildung reduziert.

Bei der Authentifikation eines Transponders durch eine Basisstation wird typischerweise ein auf einem Challenge-Response-Verfahren basierendes Authentisierungsprotokoll verwendet. Gemäß diesem Authentisierungsprotokoll berechnet beispielsweise der Transponder auf eine Anfrage der Basisstation hin eine Skalarmultiplikation und erhält als Ergebnis eine x-Koordinate in affiner Darstellung. Bei bisher bekannten Verfahren wurden von dem Transponder bei der Rückübertragung der Antwort die vollständige affine x-Koordinate als Antwortsignal an die Basisstation zurückgesendet.

Die der vorteilhaften Ausgestaltung der Erfindung zugrunde liegende Erkenntnis besteht nun darin, dass von dem Transponder für die Übertragung der affinen Darstellung der x-Koordinate nicht der vollständige Werte zurück an die Basisstation gesendet werden muss. Vielmehr reicht es aus, wenn der Wert zumindest teilweise zurückgesendet wird. Auch mit dieser quasi unvollständigen Antwort ist dann die Basisstation noch in der Lage, eine Authentisierung mit relativ hoher Sicherheit vorzunehmen.

In einer weiteren vorteilhaften Ausgestaltung der vorliegenden Erfindung berechnet beispielsweise der Transponder auf eine Anfrage der Basisstation hin eine Skalarmultiplikation und erhält als Ergebnis eine x-Koordinate in einer projektiven Darstellung. Diese projektive Darstellung enthält zwei Werte (X, Z), die in binärer Darstellung aneinander gereiht darstellbar sind. Bei bisher bekannten Verfahren wurden von dem Transponder bei der Rückübertragung der Antwort beide Werte, das heißt das Paar (X, Z) der x-Koordinate, als Antwortsignal an die Basisstation zurückgesendet.

Die der vorteilhaften Ausgestaltung der Erfindung zugrunde liegende Erkenntnis besteht nun darin, dass von dem Transponder für die Übertragung der projektiven Darstellung der x-Koordinate nicht beide Werte zurück an die Basisstation gesendet werden müssen. Vielmehr reicht es aus, wenn lediglich einer dieser beiden Werte vollständig und der jeweils zweite Wert zumindest teilweise zurückgesendet werden. Auch mit dieser quasi unvollständigen Antwort ist dann die Basisstation noch in der Lage, eine Authentisierung mit relativ hoher Sicherheit vorzunehmen.

Der besondere Vorteil liegt bei beiden aufgeführten Ausgestaltungen darin, dass damit die von dem Transponder zurück übertragenen Antwortdaten reduziert werden können, was für die Authentifikation insgesamt die Menge der zu übertragenden Antwortdaten verringert. Dadurch bedingt benötigt der Transponder eine geringere Zeit für die Rückübertragung, der Authentifizierung und der damit verbunden Rechenoperationen. Außerdem wird auch in diesen Ausführungsformen der Static Diffie Hellman Angriff abgewehrt, da nicht mehr die vollständige x-Koordinate des Ergebnispunktes in affiner oder projektiver Darstellung ausgegeben wird, und somit die für den beschriebenen Angriff notwendige Iteration der Skalarmultiplikation unter Verwendung des Orakels nicht mehr möglich ist. Insgesamt lässt sich damit das gesamte Authentifizierungsverfahren signifikant einfacher und auch schneller gestalten, ohne dass damit ein Sicherheitsverlust bei der Authentifikation einhergeht.

Beispielsweise überträgt der Transponder vom Wert der affin dargestellten x-Koordinate oder von einem der beiden Werte der projektiv dargestellten x-Koordinate lediglich einen Teil, beispielsweise die Hälfte. Erfindungsgemäß wird dies dadurch realisiert, dass beispielsweise lediglich der obere Teil beziehungsweise die obere Hälfte oder auch der untere Teil beziehungsweise die untere Hälfte des entsprechend berechneten Wertes der x-Koordinate zurück übertragen wird. Die Basisstation prüft dann, ob dieser Teil beziehungsweise Hälfte des Wertes mit dem entsprechenden Teil beziehungsweise Hälfte des zu diesem berechneten Wert entsprechenden Wertes übereinstimmt. Lediglich dann, wenn der Teil beziehungsweise die Hälfte der Bits identisch sind, wird seitens der Basisstation der die Antwortdaten sendende Transponder als authentisch akzeptiert.

Das erfindungsgemäße Authentifikationsverfahren mit der Variante der Datenreduktion in bestimmten Anwendungen des Transponders, bei denen der Transponder projektiv dargestellte Koordinaten als Antwort zurück überträgt, hat verschiedene Vorteile:

Die Menge der zu übertragenden Bits der x-Koordinate in der projektiven Darstellung reduziert sich signifikant. Im oben genannten Fall, bei dem lediglich die Hälfte der Bits eines der beiden Werte übertragen wird, reduziert sich die Gesamtmenge der zu übertragenen Daten dann im affinen Fall um die Hälfte und im projektiven Fall um ein Viertel.

Die Datenreduktion verursacht in vielen Anwendungen, wie beispielsweise in dem in der vorliegenden Patentanmeldung angegebenen Authentisierungsprotokoll, nur eine vernachlässigbare Reduktion der Sicherheit. Es ist ein bekanntes Resultat der Kryptographie, dass eine für kryptographische Anwendungen geeignete elliptische Kurve über einem endlichen Körper $GF(2^d)$ nur eine Sicherheit von $2^{d/2}$ bietet. Das heißt, obwohl Elemente des Körpers mit einer Länge von d Bits verwendet werden, entspricht die Sicherheit dieser Art der Authentifikation unter Verwendung eines öffentlichen Schlüssels nur einer Schlüssellänge von d/2. Damit ist es aus Sicht eines unberechtigten Nutzers genauso schwierig, das Authentifikationsverfahren zu durchbrechen und dadurch an den geheimen Schlüssel des Transponders zu gelangen, wie bei dem oben beschriebenen erfindungsgemäßen Authentifikationsverfahren mit reduzierter Datenmenge bei der Antwortrückübertragung eine gültige Antwort bereitzustellen. Je nach Anwendungsfall und dem dort vorgegebenen oder auch benötigten Sicherheitsbedarf ist es möglich, die Anzahl der Bits der vom Transponder an die Basisstation anteilig übertragenen x-Koordinate noch weiter zu reduzieren.

Die nicht übertragenden Bits stellen ein zufällig erzeugtes Geheimnis dar, welches nur dem Transponder und der an der Datenkommunikation beteiligten Basisstation bekannt ist. Diese nicht übertragenen Bits lassen sich beispielsweise als Schlüssel in nachfolgenden Protokollschritten des erfindungsgemäßen Authentifikationsverfahrens verwenden. Das bedeutet, dass bei dem erfindungsgemäßen Authentifikationsverfahren mit Datenreduktion durch nur teilweise Übertragung von x-Koordinaten das Protokoll zur (einseitigen) Authentisierung zu einem Protokoll zur (einseitigen) Authentisierung mit Schlüsseleinigung erweitert wird.

Bei einer Variante des erfindungsgemäßen Authentifikationsverfahrens kann, falls der Transponder Divisionen im endlichen Körper durchführen und damit die affine Darstellung der Koordinaten der Response berechnen kann, das Authentifikationsverfahrens in der beschriebenen Weise auch auf den affinen Wert angewendet werden. In diesem Fall reduziert sich die Anzahl der zu übertragenden Bits ebenfalls signifikant, typischerweise auf die Hälfte der zu übertragenden Bits.

Vorteilhafte Ausgestaltungen und Weiterbildungen der Erfindung ergeben sich aus den weiteren Unteransprüchen sowie aus der Beschreibung in Zusammenschau mit den Figuren der Zeichnung.

Die Erfindung wird nachfolgend anhand der in Figuren der Zeichnung angegebenen Ausführungsbeispiele näher erläutert. Dabei zeigen:

| | |
|---|---|
| Fig. 1a,1b | Beispiele einer elliptischen Kurve; |
| Fig. 2 | ein Beispiel einer Addition unter Verwendung ei- ner elliptischen Kurve; |
| Fig. 3 | anhand eines Blockschaltbildes den Aufbau eines erfindungsgemäßen Kommunikationssystems; |
| Fig. 4 | ein Ablaufdiagramm zur Darstellung des erfin- dungsgemäßen Authentifikationsverfahrens auf Ba- sis elliptischer Kurven; |
| Fig. 5a-5c | schematische Darstellungen zur Erläuterung des Verfahrens zur Datenreduktion der Antwortdaten und des Verfahrens zum Vergleich dieser datenre- duzierten Antwortdaten mit berechneten Antwortda- ten. |

In den Figuren der Zeichnung sind gleiche und funktionsgleiche Elemente, Merkmale und Signale, sofern nichts Anderes ausgeführt ist, mit denselben Bezugzeichen versehen.

Das erfindungsgemäße Authentifikationsverfahren weist ein neues Sicherheitsprotokoll auf, welches auf einer Arithmetik für elliptische Kurven aufsetzt. Bevor das erfindungsgemäße Authentifikationsverfahren beschrieben wird, werden daher zunächst die wichtigsten Eigenschaften elliptischer Kurven anhand der Fig. 1a und 1b erläutert.

Eine elliptische Kurve über einem endlichen Körper (Galois-Feld) GF($2^d$) ist die Nullstellenmenge der kubischen Gleichung

$$y^2 + xy = y^3 + ax^2 + b. \quad (1)$$

x und y bezeichnen hier Variablen und die Koeffizienten a und b mit b≠0 bezeichnen Koeffizienten im Galois-Feld GF($2^d$).

In Fig. 1a und Fig. 1b sind beispielhaft zwei elliptische Kurven über den reellen Zahlen dargestellt.

Unter Hinzunahme eines unendlich fernen Punktes als neutrales Element bildet diese Nullstellenmenge eine additive Gruppe, deren Gruppengesetz zumindest bei elliptischen Kurven über den reellen Körpern geometrisch interpretiert werden kann. Eine solche additive Gruppe besteht aus einer Zahlenmenge und einer Addition (Gruppenoperation). Außerdem existiert in dieser Gruppe ein neutrales Element, das bei Addition zu einer Zahl aus der Zahlenmenge dessen Wert nicht ändert (beispielsweise die Null). Weiterhin existiert zu jedem Wert der Zahlenmenge ein inverses Element, sodass bei Addition des entsprechenden Wertes mit dem inversen Element das neutrale Element gewonnen wird. Wesentlich sind dabei zwei Ergebnisse aus der algebraischen Geometrie (siehe Fig. 2):

Jede Gerade schneidet eine elliptische Kurve in drei, nicht notwendigerweise voneinander verschiedenen Punkten. Zu je zwei, nicht notwendigerweise verschiedenen Punkten kann ein dritter Punkt berechnet werden, sodass die Summe der drei Punkte das neutrale Element darstellt. Seien P und Q (mit P≠-Q) zwei Punkte und g die Gerade durch diese Punkte P, Q, dann schneidet diese Gerade g die elliptische Kurve in einem dritten Punkt R. Durch Spiegeln von R an der X-Achse erhält man S=P+Q. Für den Fall P=-Q ist die Steigung von g unendlich und der dritte Schnittpunkt R ist der unendlich ferne Punkt.

Analog zur Definition der Skalarmultiplikation in Vektorräumen ist die Skalarmultiplikation auf elliptischen Kurven definiert. Es sei P ein Punkt einer elliptischen Kurve und k sei eine natürliche Zahl. Die Skalarmultiplikation k*P entspricht einer k-maligen Addition von P zu sich selbst. Diese Skalarmultiplikation k*P bildet den wesentlichen Baustein in kryptographischen Systemen basierend auf elliptischen Kurven. Bei kryptographisch starken elliptischen Kurven stellt die Skalarmultiplikation eine Einwegfunktion dar, das heißt sie ist in polynomieller Zeit berechenbar, aber nach Stand der Forschung und Technik nur in exponentieller Zeit invertierbar. Eine effiziente algorithmische Rekonstruktion des Skalars ist daher schwer vorstellbar. Diese Einwegfunktion bildet die Grundlage für kryptographische Authentifikationsverfahren auf der Basis elliptischer Kurven.

Eine bekannte Methode zur Implementierung solcher Skalarmultiplikationen auf der Basis elliptischer Kurven ist die so genannte Montgomery-Leiter oder auch Montgomery-Algorithmus. Die Montgomery-Leiter lässt sich in der Gestalt implementieren, dass zur Berechnung der x-Koordinate eines skalaren Vielfachen eines Punktes P nur die x-Koordinate von P und ausschließlich Additionen und Multiplikationen in dem Galois-feld $GF(2^d)$ verwendet werden. Es sind hier keine aufwändigen Inversionen erforderlich. Das nachfolgend beschriebene erfindungsgemäße beidseitige Authentifikationsverfahren basiert auf diesem Montgomery-Algorithmus.

Bevor das erfindungsgemäße zweiseitige Authentifikationsverfahren beschrieben wird, wird nachfolgend anhand des Blockschaltbildes in der Fig. 3 zunächst der prinzipielle Aufbau eines erfindungsgemäßen Kommunikationssystems näher erläutert.

In Fig. 3 ist mit Bezugszeichen 1 ein Kommunikationssystem, beispielsweise ein RFID-Kommunikationssystem, bezeichnet. Das RFID-Kommunikationssystem 1 enthält einen ersten Teilnehmer (Basisstation 2) und zumindest einen zweiten Teilnehmer (Transponder 3) Basisstation 2 und Transponder 3 stehen über eine drahtlose Kommunikationsstrecke 4 in bidirektionaler kommunikativer Verbindung. Das Kommunikationssystem 1 kann zum Beispiel als so genanntes Master-Slave-Kommunikationssystem 1 ausgebildet sein, wobei die Basisstation 2 zum Beispiel als Master und der oder die Transponder 3 zum Beispiel jeweils als Slave fungieren.

Die Basisstation 2 umfasst eine Steuereinrichtung 5, eine Sende-/Empfangseinrichtung 6 sowie eine Sende-/Empfangsantenne 7. In gleicher Weise umfasst auch der Transponder eine Steuereinrichtung 8, eine Sende-/Empfangseinrichtung 9 sowie eine gemeinsame Sende-/Empfangsantenne 10.

Die Sende-/Empfangsantennen 7, 10 können als induktive Spulenantennen oder auch als Dipolantennen ausgebildet sein.

In den jeweiligen Steuereinrichtungen 5, 8 wird der Ablauf der Datenkommunikation gesteuert. Typischerweise enthält diese Steuereinrichtung hierzu eine Recheneinrichtung (Rechenwerk, CPU), in welcher die Rechenoperationen insbesondere für die Authentifikation durchgeführt werden. Die Steuereinrichtungen 5, 8 können beispielsweise als programmgesteuerte Einrichtung, wie zum Beispiel als Mikrokontroller oder Mikroprozessor, ausgebildet sein oder auch in festverdrahteter Logik-Schaltung implementiert sein.

Die Steuereinrichtung 5 der Basisstation 2 ist dazu ausgelegt, über die Antenne 7 hochfrequente Trägersignale 11 zu der Antenne 10 des Transponders 3 zu senden. In gleicher Weise sind die Steuereinrichtung 8 und die Sende-/Empfangseinrichtung 9 des Transponders 3 dazu ausgelegt, auf die gesendeten Trägersignale 11 hin entsprechende Antwortsignale 12 zu der Basisstation 2 zurückzusenden.

Die Basisstation 2 weist ferner eine Auswerteinrichtung 14 auf. Diese Auswerteeinrichtung 14 ist im Empfangspfad 21 der Basisstation 2 angeordnet und dem Empfänger der Sende-/Empfangseinrichtung 6 nachgeschaltet angeordnet. In gleicher Weise weist auch der Transponder 3 eine Auswerteeinrichtung 15 im Empfangspfad 23 des Transponders 3 auf. In den jeweiligen Auswerteeinrichtungen 14, 15 erfolgt die Auswertung der empfangenen Daten einer Datenkommunikation.

Erfindungsgemäß weist nun sowohl die Basisstation 2 als auch der Transponder 3 ein Authentifikationsmodul 16, 17 auf, welche zwischen der jeweiligen Sende-/Empfangseinrichtung 6, 9 und Steuereinrichtung 5, 8 der Basisstation 2 beziehungsweise des Transponders 3 angeordnet sind. Diese Authentifikationsmodule 16, 17 sind hier als gesonderte Module ausgebildet. Vorzugsweise ist ein jeweiliges Authentifikationsmodul 16, 17 jedoch Bestandteil der jeweiligen Steuereinrichtung 5, 8.

Ein Authentifikationsmodul 16, 17 weist ferner einen Speicher 18, 19 auf, in welchem beispielsweise Daten, Schlüssel oder dergleichen, die für die Authentifikation erforderlich sind oder zwischengespeichert werden müssen, abgelegt sind. Die Speicher 18, 19 enthalten typischerweise einen RAM-Speicher, in dem zum Beispiel Rechenergebnisse abgelegt sind. Zusätzlich oder alternativ können diese Speicher 18, 19 auch einen nichtflüchtigen Speicher, wie beispielsweise EEPROM- oder Flash-Speicher, aufweisen, in welchen Systemparameter, Parameter der verschiedenen Kommunikationsteilnehmer, wie zum Beispiel ein teilnehmerspezifischer privater Schlüssel, ein öffentlicher Schlüssel, ein teilnehmerspezifisches Zertifikat oder dergleichen, abgelegt sind.

Das Prinzip des erfindungsgemäßen Authentifikationsverfahrens (oder Authentifikationsprotokoll) wird beispielhaft mit Bezug auf die schematischen Darstellungen in den Fig. 4 und 5 erläutert.

Fig. 4 zeigt schematisch die Basisstation 2 und den Transponder 3 des Kommunikationssystems 1, wobei dort lediglich die Authentifikationsmodule 16, 17 und die Speichereinrichtungen 18, 19 innerhalb dieser Einrichtungen 2, 3 dargestellt sind. Es sei angenommen, dass in der basisstationsseitigen Speichereinrichtung 18 öffentliche Schlüssel hinterlegt sind und dass in der Speichereinrichtung 19 des Transponders 3 dessen Zertifikat, der transponderseitige geheime Schlüssel sowie gegebenenfalls der öffentliche Schlüssel hinterlegt sind.

Nachfolgend wird ein Beispiel des erfindungsgemäßen Authentifikationsverfahren auf Basis elliptischer Kurven anhand des Ablaufdiagramms in Fig. 4 beschrieben.

Als Systemparameter, also als Parameter, die für das gesamte Kommunikationssystem 1 und damit für die gesamte Authentifikation gelten, werden folgende Parameter vorgegeben.

- Es wird eine geeignete elliptische Kurve vorgegeben.
- xp bezeichnet eine affine x-Koordinate des Basispunktes P auf der elliptischen Kurve.
- xS bezeichnet einen öffentlichen, also der Basisstation und dem Transponder bekannten Schlüssel zur Signaturverifikation.

Für den Transponder 3 sind folgende Parameter vorgesehen:

- ξT bezeichnet den transponderseitigen geheimen Schlüssel, den also die Basisstation 2 nicht kennt.
- xT,rT,sT bezeichnen das Zertifikat Z des Transponders 2, wobei xT den öffentlichen Schlüssel (affine x-Koordinate des Punktes T=ξT*P) und rT,sT die Signatur von xT, verifizierbar mit dem öffentlichen Schlüssel xS, bezeichnen.

Das in Fig. 4 dargestellte Authentifikationsverfahren wird wie folgt durchgeführt:

In den Schritten 1) - 3) erzeugt die Basisstation 2 die Anfrage C = x1 (C = Challenge). Hierzu wird zufällig ein Wert r1 gewählt. Anschließend berechnet die Basisstation 2 aus diesem Wert r1 sowie dem Systemparameter xp die Anfrage (X1, Z1), welche die projektive x-Koordinate des Punktes P1 (P1=r1*P) darstellt. Aus diesen beiden Werten X1, Z1 wird durch eine Division die affin dargestellte x-Koordinate x1 als Anfrage berechnet. Diese Anfrage x1 stellt die x-Koordinate des Punkte P1 = r1 * P für einen zufälligen Skalar dar.

Die Basisstation 2 sendet diese Anfrage C = x1 in Schritt 4) an den Transponder 3.

Im Schritt 5) erfolgt eine Berechnung der Antwort R (R = Response). Hierzu berechnet der Transponder 3 zur Anfrage x1 die entsprechenden Antwortdaten R=(X2,Z2), die die projektiven x-Koordinaten des Punktes P2=ξT*P1=ξT*(r1*P) darstellen.

Im Schritt 6) werden die vom Transponder 3 erzeugten Antwortdaten R = (X2,Z2), welche eine zufällig gewählte projektive Darstellung der x-Koordinate des Punktes P2 darstellen, unter Anwendung einer nicht-injektiven Transformation zu R' = (X2', Z2) reduziert. Erfindungsgemäß wird hier bei einem dieser beiden Werte (X2,Z2) im Verfahrensschritt 6) also eine Datenreduktion vorgenommen.

Im Schritt 7) werden die von dem Transponder 3 erzeugten Antwortdaten R' = (X2', Z2) zusammen mit dem Zertifikat Z = xT,rT,sT des Transponders 3 an die Basisstation 2 zurückgesendet.

Die Basisstation 2 prüft das Zertifikat Z = xT,rT,sT des Transponders 3 im Schritt 8). Ist das Zertifikat Z nicht gültig, dann lehnt die Basisstation 2 den Transponder 3 als nicht authentisch ab.

In den Schritten 9) und 10) überprüft die Basisstation 2 die Antwort des Transponders 3. Die Basisstation 2 berechnet die berechnete projektive x-Koordinate (X3,Z3) des Punkts P3=r1*xT=r1*(ξT*P) und prüft dabei, ob die vom Transponder 3 übertragenen Daten (X2',Z2) mit den in der Basisstation 2 erzeugten Daten (X3,Z3) projektive Koordinaten des gleichen Punktes sein können. Dies ist genau dann der Fall, wenn für die Ergebnisse der Skalarmultiplikationen gilt:

$$F(Z2*X3/Z3)=X2',$$

wobei F die gleiche nicht-injektive Abbildung darstellt, welche der Transponder 3 in Schritt 6) zur Berechnung der Antwortdaten R' = (X2', Z2) verwendet hat. Im beschriebenen Ausführungsbeispiel wird hierzu in gleicher Weise eine Datenreduktion auf dem berechneten Wert Z2*X3/Z3 ausgeführt, wie dieses in Schritt 6) im Transponder 3) erfolgt ist.

Gilt dieser Zusammenhang, dann ist der Transponder 3 authentisch. Ist dies nicht der Fall, dann lehnt die Basisstation 2 den die Antwortdaten R' sendenden Transponder 3 als nicht authentisch ab.

Wesentlich ist hier, dass die Erzeugung der Anfrage C und der Antwort R, R' sowie die entsprechenden Zertifikate Z so vorgegeben werden, dass das entsprechende Authentifikationsprotokoll auf der Basis elliptischer Kurven über dem Galois-Feld GF($2^d$) durchgeführt werden kann.

Bei bisher bekannten Verfahren wurde die gesamte x-Koordinate (X2, Z2) des Punktes P2 zurück zur Basisstation übertragen, das heißt von dieser x-Koordinate wurden beide Werte X2,Z2 der Antwort R vollständig zurück übertragen. Die Basisstation 2 konnte bei der Prüfung der Response R auf die Anwendung der nicht-injektiven Transformation zur Datenreduktion verzichten und der für die Prüfung notwendige Zusammenhang hatte die Form X2*Z3 = X3*X2. Damit hat sich nach dem Verfahrensschritt 5) unmittelbar der Schritt 7) angeschlossen. Erfindungsgemäß ist nun zwischen den Schritten 5) und 7) ein zusätzlicher Verfahrensschritt 6) vorgesehen. Dieser zusätzliche Verfahrensschritt 6) bezeichnet einen Datenreduktionsschritt. Bei diesem Verfahrensschritt 6) werden die vom Transponder 3 erzeugten Antwortdaten R = (X2,Z2), welche eine zufällig gewählte projektive Darstellung der x-Koordinate des Punktes P2 darstellen, durch Anwendung einer nicht-injektiven Transformation reduziert. Erfindungsgemäß wird hier bei einem dieser beiden Werte (X2,Z2) im Verfahrensschritt 6) also eine Datenreduktion vorgenommen.

Im Ausführungsbeispiel in der Fig. 5 sei angenommen, dass bei dem ersten Wert X2 der projektiven Darstellung der x-Koordinate (X2,Z2) eine Datenreduktion vorgenommen wird, sodass die x-Koordinate nunmehr die beiden Werte (X2',Z2) aufweist und X2' einen gegenüber dem Wert X2 datenreduzierten Inhalt aufweist. Diese datenreduzierte Antwort R' = (X2',Z2) wird anschließend im Verfahrenschritt 7) von dem Transponder 3 an die Basisstation 2 zusammen mit dem Zertifikat Z des Transponders 3 gesendet.

Es versteht sich von selbst, dass statt einer Datenreduktion des ersten Wertes X2 der x-Koordinate zusätzlich oder alternativ auch eine Datenreduktion des jeweils zweiten Wertes Z2 vorgenommen werden kann.

Die Basisstation 2 prüft anschließend, ob die in der Basisstation 2 berechnete Zahl (X3,Z3) mit der vom Transponder 3 gesendeten Antwort R' übereinstimmt. Da diese Antwort R' = (X2',Z2) aber nicht vollständig ist, sondern datenreduziert vorliegt, wird lediglich der entsprechende Teil des Terms X3*Z2/Z3, welcher durch Anwendung der nicht-injektiven Transformation erhalten wird, mit der Komponente der Antwort X2' überprüft. Nur wenn im Ausführungsbeispiel dieser entsprechende Teil der Zahl X3*Z2/Z3 mit X2' übereinstimmt, dann wird der Transponder 3 von der Basisstation 2 als authentisch akzeptiert.

Nachfolgend wird dieses Verfahren zur Datenreduktion sowie das entsprechende Verfahren zum Vergleich dieser datenreduzierten Werte anhand schematischer Darstellungen in den Fig. 5a-5c kurz erläutert:

Fig. 5a zeigt dabei die mit dem Verfahrensschritt 5) erzeugte x-Koordinate beziehungsweise Zahl 30. In Fig. 5a ist zunächst die Struktur der Zahl 30 dargestellt. Diese Zahl 30 enthält zwei Zahlenwerte X2, Z2. Diese x-Koordinate 30 und dabei deren Werte X2, Z2 sind hier in binärer Codierung dargestellt. Es sei angenommen, dass jeder der beiden Werte X2, Z2 acht Bit breit ist und diese beiden acht Bit breiten Werte X2, Z2 unmittelbar aneinander angeordnet sind. Die gesamte x-Koordinate 30 ist somit 16 Bit breit. Der Wert X2 dieser Zahl 30 ist im gezeigten Beispiel unterteilt in eine obere, vier Bit breite Hälfte 32 mit der Bitfolge 1010 und eine untere vier Bit breite Hälfte 33 mit der Bitfolge 1011. Auch der Wert Z2 der Zahl 30 weist zwei Bithälften 34, 35 mit den Bitfolgen 0111 und 0101 auf.

Im Verfahrensschritt 6) wird aus der Zahl 30 eine datenreduzierte Zahl 31 mit den Werten X2', Z2 generiert. Hierzu wird beispielsweise die obere Hälfte 32 des Wertes X2 für die Erzeugung der datenreduzierten Zahl 31 vernachlässigt, das heißt die datenreduzierte Zahl 31 weist lediglich die untere Hälfte 33 des Wertes X2 sowie den vollständigen Wert Z2 auf. Nach der Datenreduktion im Schritt 6) enthält die datenreduzierte x-Koordinate 31 lediglich die untere Hälfte 33 des Wertes X2 sowie beide Hälften 34, 35 des Wertes Z2. Die obere Hälfte 32 des Wertes X2 ist nun nicht mehr Bestandteil der datenreduzierten x-Koordinate 31 und wird somit auch nicht von dem Transponder 3 zu der Basisstation 2 zurück übertragen.

Im gezeigten Beispiel der Fig. 5 wurde für die datenreduzierte x-Koordinate 31 die obere Hälfte 32 vernachlässigt. Denkbar wäre selbstverständlich auch, hier die untere Hälfte 33 des Wertes X2 oder eine der beiden Hälften 34, 35 des Wertes Z2 zu vernachlässigen. Darüber hinaus wurde jeweils genau die Hälfte 32 des Wertes X2 und damit vier Bits des acht Bit Inhalts des Wertes X2 vernachlässigt. Denkbar wäre hier eine beliebige von 0 verschiedene Datenreduktion des Wertes X2, das heißt es wäre auch denkbar, beispielsweise lediglich ein Bit bis zu sieben Bits des Wertes X2 für die Generierung der datenreduzierten x-Koordinate zu vernachlässigen. Es wäre auch denkbar, weitere nicht-injektive Abbildungen von Elementen des endlichen Körpers anzuwenden, welche nicht auf einfache Weise durch vernachlässigen von Bits einer der Werte der projektiven Darstellung realisiert werden können.

Anhand der Fig. 5c wird nun der Verfahrensschritt 10) beschrieben. Bei der Authentizitätsprüfung wird zunächst aus den Werten X3, Z3 und dem in der Antwort des Transponders 3 enthalten Wert Z3 die Zahl 37 durch die Formel X3 * Z2 / Z3 berechnet. Die Zahl 37 wird wiederum in zwei Hälften, die Zahlen 38 und 39 unterteilt. Die Überprüfung der Authentizität erfolgt nun nicht durch den Vergleich der beiden Zahlenpaaren 32,33 und 38,39, sondern es wird lediglich die Zahl 33 mit der Zahl 39 verglichen.

Im vorliegenden Fall der Fig. 5 ist der Bit-Inhalt des Abschnitts 33 identisch mit dem jeweiligen Bit-Inhalt des Abschnitts 39, sodass in diesem Fall die Basisstation 2 den entsprechenden Transponder 3, der die datenreduzierte Zahl 31 gesendet hat, als authentisch identifiziert. Dies, obgleich der obere Abschnitt 32 des Wertes X2 nicht mit dem oberen Abschnitt 38 des entsprechenden Wertes X3*Z2/Z3 verglichen wird. Man geht hier von der Erkenntnis aus, dass insbesondere bei sehr großer Bit-Breite der zu vergleichenden Zahlen es bereits ausreicht, lediglich einen Teil dieser Werte zu übertragen und mit dem entsprechenden Teil zu vergleichen. Stimmen diese miteinander verglichenen Abschnitte überein, dann kann man mit sehr großer Wahrscheinlichkeit davon ausgehen, dass die entsprechenden Zahlenpaare 32,33 und 38,39 identisch sind.

Obgleich die vorliegende Erfindung vorstehend anhand eines bevorzugten Ausführungsbeispiels beschrieben wurde, ist sie darauf nicht beschränkt, sondern lässt sich auf mannigfaltige Art und Weise modifizieren.

So sei die Erfindung insbesondere nicht ausschließlich auf RFID-Systeme beschränkt, sondern lässt sich auch beispielsweise auf die Einzelteilerkennung (Item-Identification) erweitern. Häufig müssen solche Teile nicht eindeutig erkannt werden. Hier reicht es auch häufig aus, dass das Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines Sensors auf. Die Erfindung betrifft also auch ausdrücklich solche Sensoren, bei denen eine Kommunikation zum Auslesen und Beschreiben von Daten eines Datenträgers beziehungsweise Sensors vorgenommen werden.

Auch soll sich die Erfindung auf beliebige Datenkommunikationssysteme beziehen, die nicht notwendigerweise RFID-Systeme sind und die auch nicht notwendigerweise drahtlos ausgebildet sind.

In den Fig. 3 und 4 wurde der besseren Übersichtlichkeit halber der Aufbau des RFID-Systems und insbesondere des

Transponders und der Basisstation bewusst stark vereinfacht dargestellt. Es versteht sich von selbst, dass die Basisstation und der entsprechende Transponder die für eine Datenkommunikation zwischen Basisstation und Transponder erforderlichen Funktionseinheiten, wie Demodulator, Modulator, Energieversorgung, Synchronisationseinrichtung, Dekodierer und dergleichen, ebenfalls enthalten kann.

In den Fig. 3 und 4 wurde jeweils zwischen Steuereinrichtung, Auswerteeinrichtung und Authentifikationsmodul unterschieden. Es versteht sich von selbst, dass diese Einrichtungen oder Teile davon z.B. Bestandteil der Steuereinrichtung sein können oder auch getrennt davon ausgebildet sein können.

Ebenfalls sei darauf hingewiesen, dass sowohl die Basisstation als auch der Transponder eine einzige Sende-/Empfangseinrichtung und eine zugehörige Sende-/Empfangsantenne aufweisen können. Denkbar wäre selbstverständlich auch, dass die Basisstation und/oder der Transponder getrennte Sende/Empfangseinrichtungen und insbesondere eine Sendeantenne und eine davon getrennte Empfangsantenne aufweisen können.

Das vorstehend beschriebene Datenkommunikationssystem und Datenkommunikationsverfahren wurden anhand des "Reader-talks-first"-Prinzips beschrieben. Denkbar wäre natürlich auch das Prinzip "Tag-talks-first", bei dem die Basisstation zunächst auf eine Anfrage eines Transponders wartet. Allerdings weist dieses zweit genannte Prinzip eine schlechtere Reaktionszeit auf, so dass vor allem bei modernen so genannten "long-range" Datenkommunikationssystemen, wie sie zum Beispiel bei RFID eingesetzt werden, vorzugsweise das "Reader-talks-first"-Prinzip eingesetzt wird.

Es versteht sich von selbst, dass das anhand von Fig. 5 beschriebene erfindungsgemäße Authentifikationsverfahren lediglich beispielhaft zu verstehen ist. Selbstverständlich ließen sich dort die einzelnen Verfahrensschritte und angewendeten mathematischen Operationen auch im Rahmen der Erfindung abwandeln und modifizieren, beispielsweise durch funktionsgleiche oder alternative Verfahrensschritte.

Ferner sei darauf hingewiesen, dass die angegebenen Zahlenangaben und Bitbreiten lediglich beispielhaft zu verstehen sind und die Erfindung jedenfalls nicht darauf beschränken sollen. Insbesondere wäre es auch denkbar, eine größere oder eine kleinere Bitbreite für die jeweiligen Werte zu verwenden. Darüber hinaus müssen die verschiedenen Abschnitte eines Wertes auch nicht eine gleiche Bitbreite aufweisen, sondern können unterschiedlich sein. Das gleiche gilt für die Bitbreite der beiden Werte X, Z einer jeweiligen projektiven x-Koordinate.

In der Veröffentlichung "The Static-Diffie-Hellman Problem" von Daniel R. L. Brown und Robert P. Gallant vom 23. Juni 2005 wird ein neuer Angriff auf kryptographische Verfahren, deren Sicherheit auf dem diskreten Logarithmus-Problem in einer endlichen Gruppe beruht, beschrieben. Dieser ist insbesondere auf elliptische Kurven anwendbar. Der beschriebene Angriff kann dann effizient durchgeführt werden, wenn einem Angreifer ein Gerät zur Verfügung steht (in der Literatur "Orakel" genannt), das einen geheimen Skalar s enthält und dem Angreifer bei Eingabe eines beliebigen Punktes U das Ergebnis der Berechnung T= sU, also den Ergebnispunkt T der Skalarmultiplikation, zurückgibt. Der Angriff benötigt insbesondere eine Folge von Punkten P0, P1, P2, ...Pn auf der elliptischen Kurve, wobei $P_i = sP_{i-1}$ gilt. Dieses Angreiferszenario ist insbesondere bei dem beschriebenen RFID-Tag gegeben. Der beschriebene RFID-Tag ist genau die technische Realisierung eines solchen Orakels.

Beim Authentisierungsprotokoll des beschriebenen RFID-Tags berechnet der Tag eine Skalarmultiplikation und erhält als Ergebnis die x- Koordinate in einer zufällig gewählten projektiven Darstellung (X2,Z2). Bisher wurde das ganze Paar (X2,Z2) als Response an das Terminal zurückgesendet. Die Sicherheit des Authentifikationsprotokolls gegenüber dem Static-Diffie-Hellman Angriffes wurde bis dato durch die Eigenschaften der verwendeten elliptischen Kurven gewährleistet. Zur Abwehr des Static-Diffie-Hellman Angriffs wurden daher elliptische Kurven verwendet, deren Ordnungen sogenannte starke Primteiler enthalten. Innerhalb dieser von starken Primteilern erzeugten zyklischen Untergruppen der endlichen Punktegruppen wurden die kryptographischen Anwendungen durchgeführt.

Das erfindungsgemäße Verfahren ist vorteilhafterweise dazu geeignet, derartige "Static-Diffie-Hellman Angriffe" abzuwehren. Der RFID-Tag gibt, wie in dem oben beschriebenen Ausführungsbeispiel, von einem der Werte X2, Z2 nur einen Teil der berechneten Bits zurück. Das Terminal prüft dann, ob die entsprechenden Bits der zahl X3*Z2/Z3 mit den zurückgegebenen Bits übereinstimmen. Falls die Bits identisch sind, wird der RFID-Tag als authentisch akzeptiert. Dadurch reduziert sich zum einen die Menge der zu übertragenden Bits der Response (X2,Z2) und zum anderen wird verhindert, dass die affine x-Koordinate des Ergebnisses rekonstruiert und für einen erneuten Aufruf der Skalarmultiplikation verwendet werden kann, um die oben beschriebene Folge von Punkten P0, P1, P2, ..., Pn für einen Angriff erzeugen zu können.

Dadurch dass nicht mehr die vollständige x-Koordinate des Ergebnispunktes ausgegeben wird, ist die für den beschriebenen Angriff notwendige Iteration der Skalarmultiplikation unter Verwendung des Orakels nicht mehr möglich und der Angriff wird abgewehrt. Wenn ein Angreifer nur noch einen Teil der x-Koordinate des Ergebnispunktes erhält, gibt es im Allgemeinen sehr viele Werte, welche als x-Koordinate eines Punktes auftreten können und dennoch mit dem dem Angreifer bekannten Teilstück übereinstimmen. Falls ein Angreifer versucht, den beschriebenen Angriff für alle möglichen Punkte, deren x-Koordinaten zu den Ausgabestücken passen, durchzuführen, wächst die Anzahl der möglichen Punktefolgen exponentiell mit der Anzahl der Iterationen an und wird schnell ineffizient. Zur Abwehr des beschriebenen Angriffs reicht es in der Praxis aus, wenn bereits einige Bits einer Koordinate des Ergebnisses abgeschnitten werden und nur wenige Fortsetzungen zu x-Koordinaten von Punkten möglich sind.

Somit bietet das erfindungsgemäße Verfahren neben einer Datenreduktion zusätzlich den Vorteil, dass ein impliziter Schutz gegen den Static-Diffie-Hellman Angriff erreicht wird. Dadurch dass ein Angreifer die Berechnungen des Orakels nicht mehr iterieren kann, ist auch der beschriebene Angriff nicht mehr möglich. Insbesondere müssen keine elliptischen Kurven verwendet werden, deren Ordnungen starke Primzahlen haben.

## Patentansprüche

**1.** Verfahren zum verschlüsselten Datenaustausch zwischen Teilnehmern (2, 3) eines Kommunikationssystems (1) unter Verwendung einer Kryptographie auf Basis elliptischer Kurven, bei dem auf eine Anfrage eines ersten Teilnehmers (2) hin von dem zweiten Teilnehmer (3) ein Ergebnis einer ersten Skalarmultiplikation berechnet wird,

- wobei mit Hilfe einer nicht-injektiven Abbildung ein Funktionswert aus dem Ergebnis der Skalarmultiplikation ermittelt wird, so dass der Funktionswert keinen eindeutigen Rückschluss auf das Ergebnis erlaubt,
- wobei der Funktionswert als Antwort zurück zu dem ersten Teilnehmer (2) gesendet wird.

**2.** Verfahren nach Anspruch 1, wobei

- als Funktionswert ein Teil des Ergebnisses der Skalarmultiplikation ermittelt wird und als Antwort zurück zu dem ersten Teilnehmer (2) gesendet wird,
- wobei die Antwort eine x-Koordinate eines Punktes auf der elliptischen Kurve enthält und
- wobei lediglich ein Teil der in der Antwort enthaltenen x-Koordinate gesendet wird.

**3.** Verfahren nach Anspruch 1, wobei

- als Funktionswert ein Teil des Ergebnisses der Skalarmultiplikation ermittelt wird und als Antwort zurück zu dem ersten Teilnehmer (2) gesendet wird,
- wobei die Antwort eine y-Koordinate eines Punktes auf der elliptischen Kurve enthält und
- wobei lediglich ein Teil der in der Antwort enthaltenen y-Koordinate gesendet wird.

**4.** Verfahren nach Anspruch 1,
**dadurch gekennzeichnet,**
**dass** die Anfrage die x-Koordinate eines Punktes auf der elliptischen Kurve enthält.

**5.** Verfahren nach einem der Ansprüche 1 bis 4,
**dadurch gekennzeichnet,**
**dass** die Koordinaten in binärer Form vorliegen.

**6.** Verfahren nach einem der Ansprüche 1 bis 5,
**dadurch gekennzeichnet,**
**dass** die in der Anfrage und/oder der Antwort enthaltene x-oder y-Koordinate des Punktes auf der elliptischen Kurve in projektiver Darstellung vorliegt.

**7.** Verfahren nach einem der Ansprüche 1 bis 6,
**dadurch gekennzeichnet,**
**dass** die Koordinate des Punktes in binärer Darstellung eine Zahl ist, welche einen ersten und einen zweiten Wert enthält, die in binärer Darstellung aneinander gereiht darstellbar sind.

**8.** Verfahren nach Anspruch 7,
**dadurch gekennzeichnet,**
**dass** lediglich ein Teil der Bits zumindest eines der beiden Werte zurück gesendet wird.

**9.** Verfahren nach Anspruch 7 oder 8,
**dadurch gekennzeichnet,**
**dass** die Hälfte der Bits zumindest eines der beiden Werte zurück gesendet wird.

**10.** Verfahren nach einem der Ansprüche 7 bis 9,
**dadurch gekennzeichnet,**
**dass** bezogen auf das MSB-Bit ein oberer Bitbereich der Bits, insbesondere eine obere Hälfte der Bits zumindest eines der beiden Werte zurück gesendet wird.

**11.** Verfahren nach einem der vorhergehenden Ansprüche,
**dadurch gekennzeichnet,**
**dass** der erste Teilnehmer (2) die empfangene Antwort des zweiten Teilnehmers (3) auf deren Authentizität prüft.

**12.** Verfahren nach einem der vorhergehenden Ansprüche,
**dadurch gekennzeichnet,**
**dass** der erste Teilnehmer (2) prüft, ob die in der Antwort enthaltenen Daten und die Daten des Ergebnisses einer zweiten Skalarmultiplikation Koordinaten des gleichen Punktes sind.

**13.** Verfahren nach einem der vorhergehenden Ansprüche,
**dadurch gekennzeichnet,**
**dass** der erste Teilnehmer (2) die in der Antwort enthaltenen Daten mit einem Ergebnis einer zweiten Skalarmultiplikation vergleicht und dass der erste Teilnehmer (2) den zweiten Teilnehmer (3) als authentisch akzeptiert, sofern entsprechende Daten der Antwort und des Ergebnisses der zweiten Skalarmultiplikation miteinander übereinstimmen.

**14.** Verfahren nach Anspruch 13,
**dadurch gekennzeichnet,**
**dass** für den Vergleich der Daten der Antwort mit dem Ergebnis der zweiten Skalarmultiplikation lediglich diejenigen Teile des Ergebnisses der zweiten Skalarmultiplikation verwendet werden, die dem Teil der von dem zweiten Teilnehmer (3) an den ersten Teilnehmer (2) gesendeten Antwort entsprechen.

**15.** Verfahren nach einem der vorhergehenden Ansprüche,
**dadurch gekennzeichnet,**
**dass** derjenige Teil des Ergebnisses der ersten Skalarmultiplikation, der nicht als Antwort zurück übertragen wird, ein zufällig erzeugtes und zumindest einem der beiden Teilnehmer (2, 3), vorzugsweise beiden Teilnehmern (2, 3) bekanntes Ergebnis darstellt, welches als geheimer Schlüssel in nachfolgenden Verfahrensschritten verwendbar ist.

**16.** Verfahren nach einem der vorhergehenden Ansprüche,
**dadurch gekennzeichnet,**
**dass** das Verfahren ein auf einem Challenge-Response-Verfahren basierendes Authentifizierungsverfahren zur Authentifizierung des zweiten Teilnehmers (3) gegenüber dem ersten Teilnehmer (2) und/oder umgekehrt ist.

**17.** Verfahren nach einem der vorhergehenden Ansprüche,
**dadurch gekennzeichnet,**
**dass** die Anfrage des ersten Teilnehmers (2) unabhängig von dem Schlüssel des zweiten Teilnehmers (3) ist.

**18.** Verfahren nach einem der vorhergehenden Ansprüche,
**dadurch gekennzeichnet,**
**dass** als Systemparameter des Kommunikationssystems (1) eine für kryptographische Verfahren geeignete elliptische Kurve und eine affine x-Koordinate eines Basispunktes der elliptischen Kurve und ein öffentlicher Schlüssel zur Signaturprüfung bereitgestellt werden.

**19.** Verfahren nach einem der vorhergehenden Ansprüche,
**dadurch gekennzeichnet,**
**dass** als Parameter des zweiten Teilnehmers (3) lediglich ein dem zweiten Teilnehmer (3) bekannter Schlüssel und ein Zertifikat des zweiten Teilnehmers (3) bereitgestellt werden.

**20.** Verfahren nach Anspruch 18,

**dadurch gekennzeichnet,**
**dass** von dem zweiten Teilnehmer (3) zusammen mit der Antwort das Zertifikat des zweiten Teilnehmers übertragen wird, welches im ersten Teilnehmer auf dessen Gültigkeit unter Verwendung eines öffentlichen, beiden Teilnehmern bekannten Schlüssels durchgeführt wird.

**21.** Kommunikationssystem (1) zur Authentifikation der Teilnehmer (2, 3) des Kommunikationssystems (1) unter Verwendung einer Kryptographie nach einem der vorherigen Ansprüche.

**22.** System nach Anspruch 21,
**dadurch gekennzeichnet,**
**dass** ein erster Teilnehmer (2) und zumindest ein zweiter Teilnehmer (3) vorgesehen sind, die in datenkommunikativer Verbindung (4) zueinander stehen, wobei der erste und zweite Teilnehmer (2, 3) für eine Authentifikation jeweils ein Authentifikationsmodul (16, 17) aufweisen.

**23.** System nach Anspruch 22,
**dadurch gekennzeichnet,**
**dass** das Authentifikationsmodul (16, 17) eines jeweiligen Teilnehmers (2, 3) eine Recheneinrichtung aufweist, die für Berechnungen, Prüfungen und Authentifikationen innerhalb des jeweiligen Authentifikationsmoduls (16, 17) vorgesehen sind.

**24.** System nach einem der vorhergehenden systembezogenen Ansprüche,
**dadurch gekennzeichnet,**
**dass** jeder Teilnehmer (2, 3) einen Speicher (18, 19) aufweist, in dem die Systemparameter sowie die jeweils diesem Teilnehmer (2, 3) zugehörigen Parameter abgelegt sind.

**25.** System nach einem der vorhergehenden systembezogenen Ansprüche,
**dadurch gekennzeichnet,**
**dass** die ersten und zweiten Teilnehmer (2, 3) Kommunikationsteilnehmer des Kommunikationssystems (1), insbesondere eines als RFID-Systems ausgebildeten Kommunikationssystems (1), sind.

**26.** System nach einem der vorhergehenden systembezogenen Ansprüche,
**dadurch gekennzeichnet,**
**dass** der erste Teilnehmer (2) eine Basisstation (2) und der zweite Teilnehmer (3) ein Transponder (3), insbesondere ein passiver oder semipassiver oder aktiver Transponder (3), ist.

FIG 1A

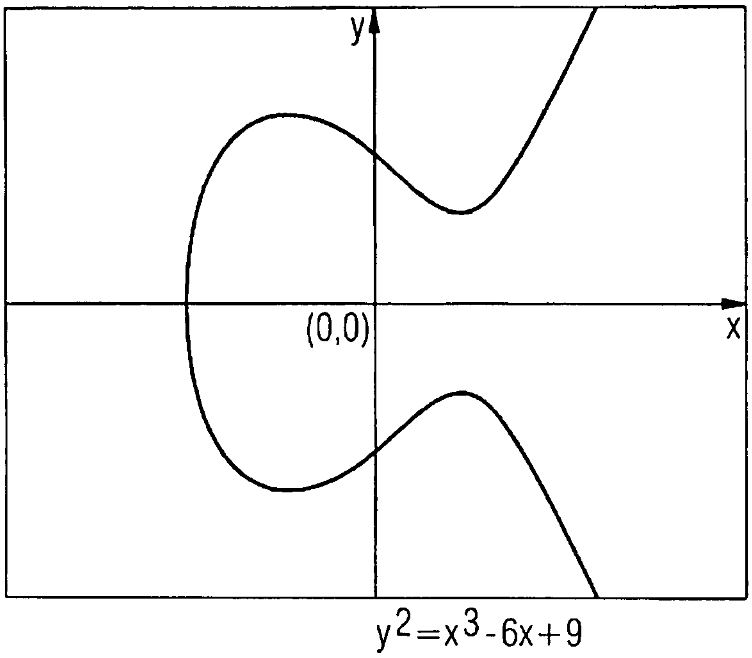


FIG 1B

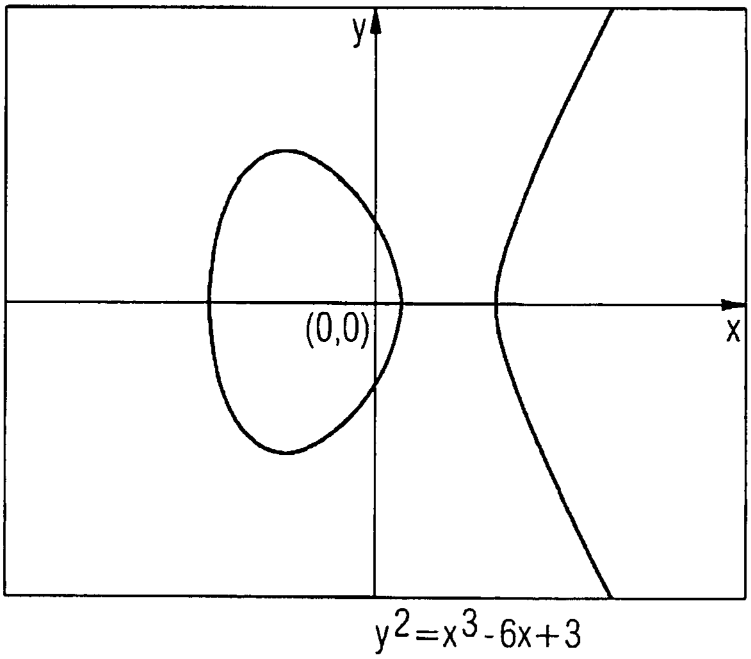

FIG 2

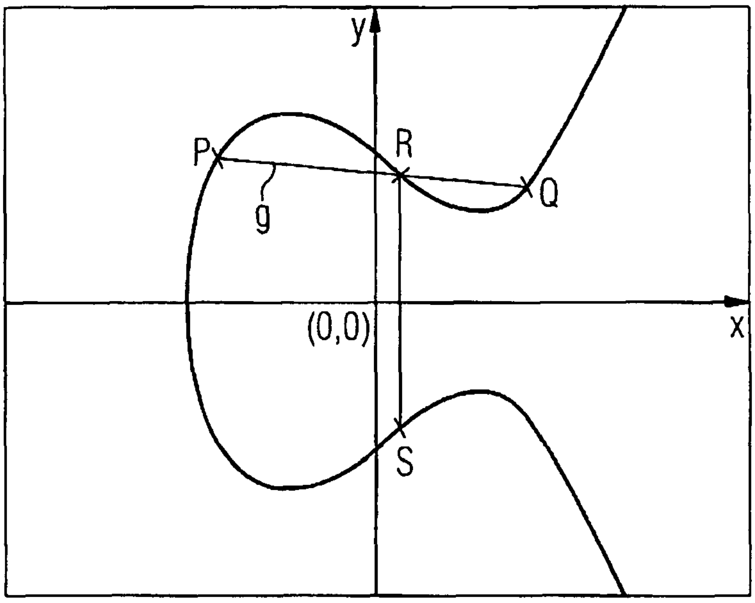

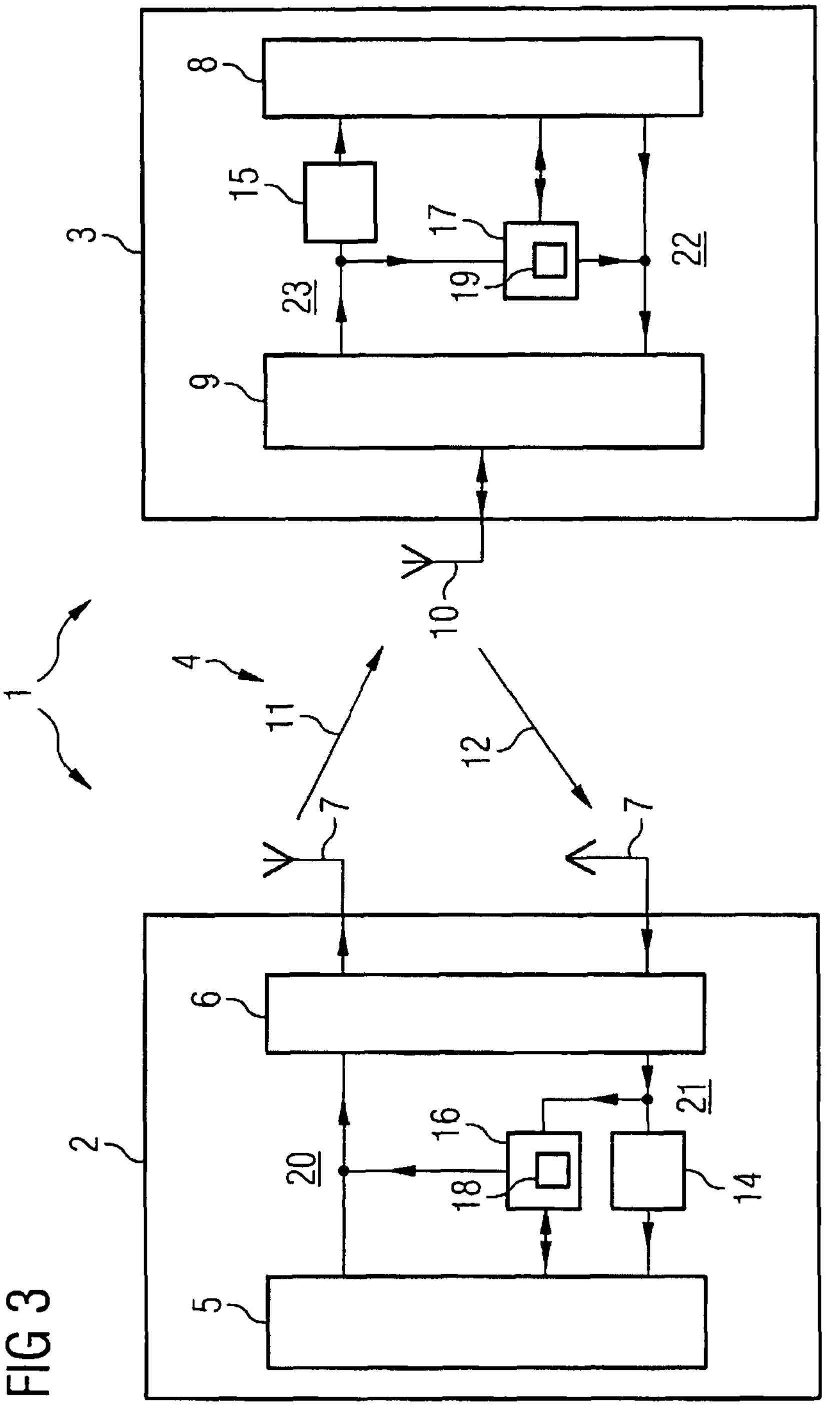


FIG 3

FIG 4

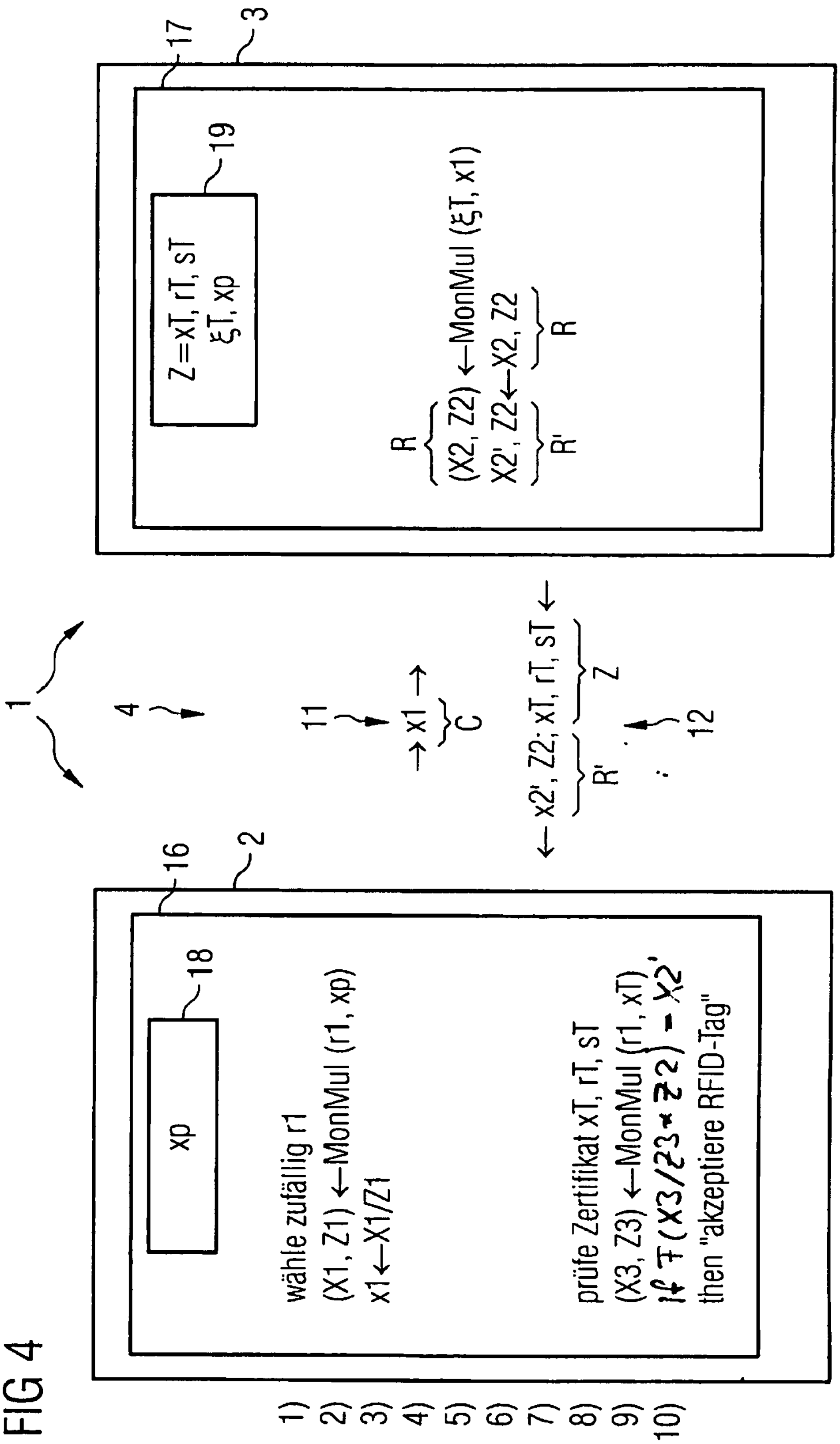
1)
2)
3)
4)
5)
6)
7)
8)
9)
10)
xp
18
16
2
wähle zufällig r1
(X1, Z1) ←MonMul (r1, xp)
x1←X1/Z1
prüfe Zertifikat xT, rT, sT
(X3, Z3) ←MonMul (r1, xT)
then "akzeptiere RFID-Tag"
1
4
11
→ x1 →
C
← x2', Z2; xT, rT, sT ←
R'
Z
12
3
17
19
Z=xT, rT, sT
ξT, xp
(X2, Z2) ←MonMul (ξT, x1)
X2', Z2'←X2, Z2
R
R'

FIG 5A

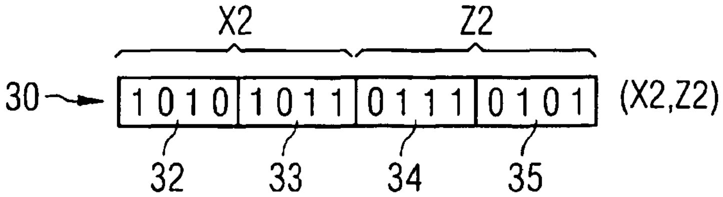


FIG 5B

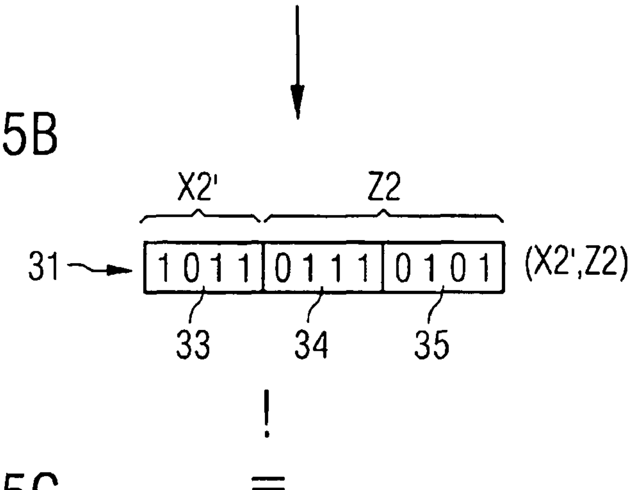


FIG 5C

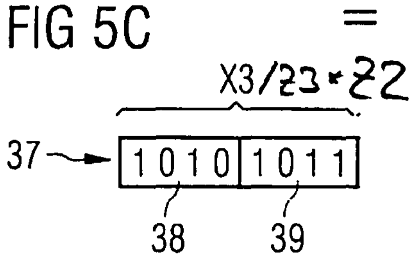

Europäisches Patentamt
European Patent Office
Office européen des brevets

# EUROPÄISCHER RECHERCHENBERICHT

Nummer der Anmeldung
EP 08 00 9277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 001070 B3 (SIEMENS AG [DE]) 30. April 2008 (2008-04-30)<br>* Absatz [0034] - Absatz [0082] *<br>----- | 1-26 | INV.<br>H04L9/30<br>H04L9/32 |
| A | HAUCK, PETER: "Kryptologie und Datensicherheit" [Online] 15. Juni 2007 (2007-06-15), , DEUTSCHLAND , XP002501226<br>Gefunden im Internet:<br>URL:http://www-dm.informatik.uni-tuebingen.de/skripte/Kryptologie/Kryptologie_WS0203.pdf><br>[gefunden am 2008-10-27]<br>* Seite 146 - Seite 152 *<br>----- | 1-26 | |
| A | DOLZMANN, ANDREAS: "Kryptogrpahie" [Online] 26. Januar 2006 (2006-01-26), , DEUTSCHLAND , XP002501227<br>Gefunden im Internet:<br>URL:http://staff.fim.uni-passau.de/algebra/teaching/crypto/10.pdf><br>[gefunden am 2008-10-27]<br>* das ganze Dokument *<br>----- | 1-26 | RECHERCHIERTE SACHGEBIETE (IPC)<br>H04L<br>G06F |
| A | WO 2008/037742 A (SIEMENS AG [DE]; BRAUN MICHAEL [DE]; HESS ERWIN [DE]; KARGL ANTON [DE]) 3. April 2008 (2008-04-03)<br>* Seite 12, Zeile 4 - Seite 28, Zeile 22 *<br>----- | 1-26 | |

Der vorliegende Recherchenbericht wurde für alle Patentansprüche erstellt

| Recherchenort | Abschlußdatum der Recherche | Prüfer |
|---|---|---|
| München | 27. Oktober 2008 | Apostolescu, Radu |

4

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 08 00 9277

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-2008

| Im Recherchenbericht angeführtes Patentdokument | Datum der Veröffentlichung | Mitglied(er) der Patentfamilie | Datum der Veröffentlichung |
|---|---|---|---|
| DE 102007001070 B3 | 30-04-2008 | WO 2008040655 A1 | 10-04-2008 |
| WO 2008037742 A | 03-04-2008 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10161138 A1
- EP 1675300 A1


### In der Beschreibung aufgeführte Nicht-Patentliteratur


- **Daniel R. L. Brown ; Robert P. Gallant.** *The Static-Diffie-Hellman Problem,* 23. Juni 2005